# EUROPEAN PATENT APPLICATION

(11) **EP 4 242 612 A1**
(43) Date of publication of application: **13.09.2023**
(21) Application number: 21889186.9
(22) Date of filing: 02.11.2021
(51) Int. Cl.: G01K 1/08, G01K 1/14, G01K 1/16, G01K 7/18

(54) **GLASS-LINED PRODUCT**

(30) Priority: 06.11.2020 JP 2020186040
(71) Applicant: Kobelco Eco-Solutions Co., Ltd, Kobe-shi, Hyogo 651-0072 (JP)
(72) Inventor: MAESETO, Tomoharu, Kobe-shi, Hyogo 651-0072 (JP)
(74) Representative: Daub, Thomas
(86) International application number: PCT/JP2021/040370
(87) International publication number: WO 2022/097633

(57) **Abstract**

The purpose of the present invention is to provide a glasslined product in which accurate temperature measurement is possible. The present invention provides a glasslined product containing a base material, a glasslining layer, a platinum resistance temperature detector; and an electrical path, in which the glasslining layer includes a first surface and a second surface that is a surface opposite to the first surface, and is laminated on the base material via the second surface, the platinum resistance temperature detector is arranged inside the glasslining layer or outside the first surface of the glasslining layer, and the electrical path extends through inside of the glasslining layer and is electrically connected to the platinum resistance temperature detector.

## Description

### CROSS-REFERENCE TO RELATED APPLICATIONS

The present application claims the benefit of Japanese Patent Application No. 2020-186040, the contents of which are incorporated by reference herein.

### TECHNICAL FIELD

The present invention relates to a glasslined product.

### BACKGROUND ART

In the related art, many of reservoirs, pipes, and the like are made of a metal material such as steel. Some of the reservoirs and the pipes may be glasslined products each having a glasslining layer on a surface of a metal base material. For example, a glasslined product is used for a reservoir in a case where an accommodated substance may be corrosive or repel contamination of an eluate from a metal material (see Patent Literature 1 below).

In the glasslined product, a mechanism capable of detecting temperature is provided in a glasslining layer for the purpose of measuring temperature of the accommodated substance or the like (see Patent Literature 2 below). Patent Literature 2 describes that temperature is detected using a measurement loop having a length of 3 m. In the measurement with such a long loop, it is difficult to detect temperature at a pinpoint, and it is difficult to accurately measure the temperature. As shown in Patent Literature 3 below, a sheath type temperature measuring resistor is inserted into a baffle, which is a glasslined product, to detect the temperature. In such a case, a glasslining layer and a base material exist between temperature measuring resistor and the accommodated substance. Therefore, it takes time for accurate measurement. In such a case, it is difficult to measure temperature accurately when temperature of the accommodated substance is unstable.

### CITATION LIST

### PATENT LITERATURE

Patent Literature 1: JP2005-060746A
Patent Literature 2: JPS47-45887A
Patent Literature 3: JP5188310B

### SUMMARY OF INVENTION

### TECHNICAL PROBLEM

In a glasslined product having a function of measuring temperature, it is desired to perform accurate temperature measurement. However, in the related art, countermeasures against such a demand have not been sufficiently studied. Therefore, an object of the present invention is to provide a glasslined product capable of accurate temperature measurement.

### SOLUTION TO PROBLEM

In order to solve the above problem, the present invention provides a glasslined product including:
a base material;
a glasslining layer;
a platinum resistance temperature detector; and
an electrical path, in which
the glasslining layer includes a first surface and a second surface that is a surface opposite to the first surface, and is laminated on the base material via the second surface,
the platinum resistance temperature detector is arranged inside the glasslining layer or outside the first surface of the glasslining layer, and
the electrical path extends through inside of the glasslining layer and is electrically connected to the platinum resistance temperature detector.

### ADVANTAGEOUS EFFECTS OF INVENTION

According to the present invention, a glasslined product capable of accurate temperature measurement can be provided.

### BRIEF DESCRIPTION OF DRAWINGS

[Fig. 1] Fig. 1 is a schematic view showing a reaction tank equipped with a glasslined product of an embodiment.
[Fig. 2] Fig. 2 is an enlarged schematic view of a main part showing a state of a detection unit of a temperature measurement device provided at the reaction tank.
[Fig. 3] Fig. 3 is a schematic view (cross-sectional view taken along a line III-III in Fig. 1) showing arrangement of a platinum resistance temperature detector and an electrical path in a glasslining layer.
[Fig. 4A] Fig. 4A is a schematic view showing a manufacturing process of a glasslined product.
[Fig. 4B] Fig. 4B is a schematic view showing a manufacturing process of a glasslined product.
[Fig. 4C] Fig. 4C is a schematic view showing a manufacturing process of a glasslined product.
[Fig. 4D] Fig. 4D is a schematic view showing a manufacturing process of a glasslined product.
[Fig. 4E] Fig. 4E is a schematic view showing a manufacturing process of a glasslined product.
[Fig. 4F] Fig. 4F is a schematic view showing a manufacturing process of a glasslined product.
[Fig. 5A] Fig. 5A is a schematic plan view of a transfer sheet used for attaching a platinum resistance temperature detector.
[Fig. 5B] Fig. 5B is a schematic front view of a transfer sheet used for attaching a platinum resistance temperature detector.
[Fig. 6] Fig. 6 is a schematic cross-sectional view showing a platinum resistance temperature detector and an electrical path arranged differently from Fig. 3.
[Fig. 7A] Fig. 7A is a schematic cross-sectional view showing a state of a platinum resistance temperature detector and an electrical path in a glasslined product having a resin layer.
[Fig. 7B] Fig. 7B is a schematic view showing a state of a platinum resistance temperature detector and an electrical path in a glasslined product having a resin layer.
[Fig. 7C] Fig. 7C is a schematic view showing a state of a platinum resistance temperature detector and an electrical path in a glasslined product having a resin layer.
[Fig. 8] Fig. 8 is a schematic cross-sectional view showing a state of a platinum resistance temperature detector and an electrical path in a glasslined product in which a terminal portion is provided in the electrical path.
[Fig. 9] Fig. 9 is a schematic cross-sectional view showing a state of a platinum resistance temperature detector and an electrical path in a mode in which a terminal portion is provided in the electrical path in a glasslined product having a resin layer.
[Fig. 10] Fig. 10 is a schematic view showing a glasslined product that enables temperature measurement at a plurality of locations.

### DESCRIPTION OF EMBODIMENTS

Hereinafter, a reaction tank used for a reaction of a liquid material according to one embodiment of the present invention will be described as an example. In the following, the reaction tank is exemplified as a specific example of use of a glasslined product, but specific examples of the use of the glasslined product in the present embodiment are not limited to the following examples.

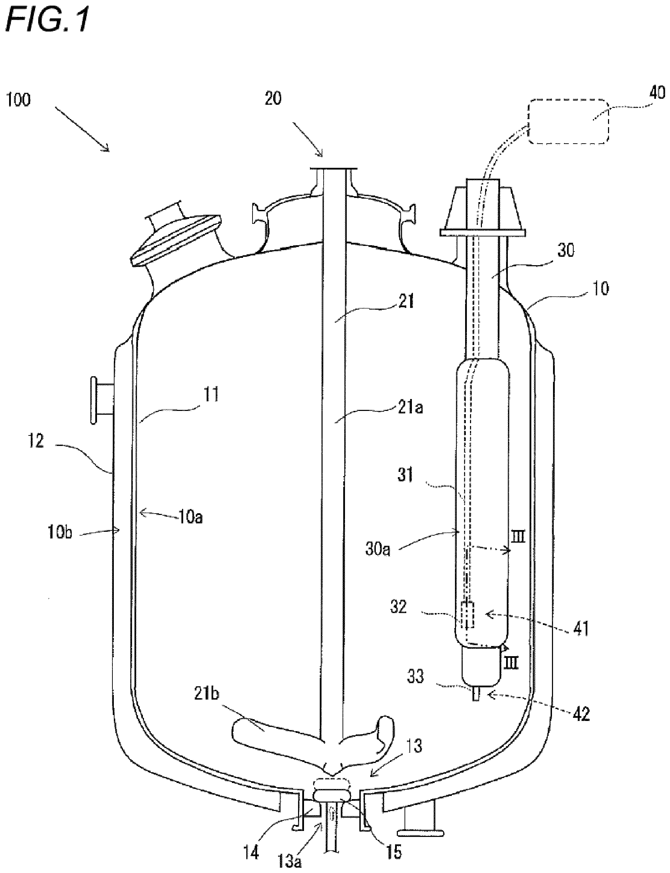

As shown in Fig. 1, a reaction tank 1 of the present embodiment includes a tank body 10 that accommodates a liquid material (not shown) which is a reactant, a stirring device 20 that stirs the liquid material accommodated in the tank body 10, and a baffle 30 that disturbs a swirling flow of the liquid material formed inside the tank body 10 by stirring in the stirring device 20 to improve stirring performance. The baffle 30 of the present embodiment includes a temperature measurement member as will be described later in detail. The reaction tank 1 of the present embodiment includes a temperature measurement device 40 that acquires temperature information inside the tank body 10 using a temperature detection function of the baffle 30. In the reaction tank 1, when a reaction generated in the reaction tank 1 is a heat generation reaction or an endothermic reaction, temperature of the reactant tends to change from moment to moment, and thus it is desired to quickly measure temperature at that moment. The temperature measurement device 40 of the present embodiment can rapidly measure temperature at a pinpoint using the temperature detection function of the baffle 30.

In the tank body 10, a glasslining is provided on a portion serving as an inner wall surface 10a in contact with the liquid material. The tank body 10 of the present embodiment has an inner wall 11 which is a base material that is in contact with a glasslining layer constituting the inner wall surface 10a from the outside and supports the glasslining layer. The inner wall 11 of the tank body 10 is made of metal and the tank body 10 is a glasslined product in which a glasslining layer is laminated on a surface of a metal base material.

The tank body 10 includes an outer wall 12 that further covers the inner wall 11 from the outside, and a gap portion 10b is provided between the outer wall 12 and the inner wall 11 to form a double wall. The tank body 10 includes a jacket structure. The tank body 10 allows a heating medium to flow between the outer wall 12 and the inner wall 11 to adjust temperature of the liquid material through the inner wall surface 10a. The tank body 10 of the present embodiment includes a temperature control device for performing at least one of heating and cooling on the accommodated liquid material, and the inner wall surface 10a of the tank body 10 serves as a heat transfer surface to the reactant in the temperature control device.

The tank body 10 is provided at the bottom of the tank body with an on-off valve device 13 for discharging an accommodated substance accommodated therein. The on-off valve device 13 is provided with a discharge port 13a for discharging the accommodated substance, and the discharge port 13a is provided so as to vertically penetrate a tank wall. The on-off valve device 13 is provided with an annular valve seat 14 whose inside is the discharge port 13a, and a valve body 15 for opening and closing the discharge port 13a. The valve body 15 is movable between a first position where the valve body 15 is brought into contact with the valve seat 14 from above to close the discharge port 13a, and a second position where the valve body 15 is located above the first state to open the discharge port 13a. Since the on-off valve device 13 including the valve body 15 and the valve seat 14 is also provided at a portion in contact with the liquid material, the on-off valve device 13 is a glasslined product in the present embodiment. That is, each of the valve body 15 and the valve seat 14 is a glasslined product in which a glasslining layer is provided on a surface of a metal base material made.

The stirring device 20 of the present embodiment includes an agitator 21 for stirring the liquid material in the tank body 10. The agitator 21 includes a rotating shaft 21a that is provided so as to extend in a vertical direction in an accommodating space of the tank body 10 and is rotated about an axis, and a stirring blade 21b that is fixed to the rotating shaft 21a and rotates together with the rotating shaft 21a. In the present embodiment, the agitator 21 is also a glasslined product in which a glasslining layer is laminated on a surface of a metallic base material.

In the present embodiment, the baffle 30 is also a glasslined product, and the baffle 30 is provided with one or more temperature detection units for measuring temperature (temperature of the liquid material) of a surface portion of the glasslining layer. That is, the baffle 30 of the present embodiment is provided with a temperature measurement member used for measuring the temperature of the surface portion of the glasslining layer. The reaction tank 1 of the present embodiment includes the temperature measurement device 40 capable of detecting temperature of an accommodated substance (liquid material in reaction), and the detection unit in which the temperature is detected by the temperature measurement device 40 is provided at a plurality of positions of the baffle 30.

In the present embodiment, as described in detail later, a platinum resistance temperature detector, a lead wire, a connection wire for electrically connecting the lead wire and the platinum resistance temperature detector, a terminal for electrically connecting the connection wire and the lead wire, and the like are provided in the baffle 30 as the temperature measurement member.

The baffle 30 of the present embodiment has a round bar shape such that the baffle 30 is provided at a position closer to a center from the inner wall surface 10a and spaced slightly from the inner wall surface 10a of the tank body 10 and extends in the vertical direction, and detection units for detecting temperature are provided at two different positions in the vertical direction. In the baffle 30 of the present embodiment, a glasslining layer is provided on an outer surface of a base material composed of a cylindrical metal tube having a closed lower end. The baffle 30 has high rigidity due to the base material as described above. Although the lower end of the baffle 30 is a free end, an upper end thereof is a fixed end fixed to the tank body 10, and thus the baffle 30 does not greatly swing due to the flow of the liquid material.

The plurality of detection units provided so that the positions in the vertical direction of the baffle 30 are different can convert the detected temperature into electrical information. The baffle 30 can transmit the electrical information to the outside via the end as the fixed end. A first detection unit 41 among the plurality of detection units is provided at a body portion above the lower end of the baffle 30. The first detection unit 41 is provided with a platinum resistance temperature detector. The platinum resistance temperature detector is embedded in the glasslining layer. A sheath thermocouple 33 is provided at a second detection unit 42 among the plurality of temperature detection units. The sheath thermocouple 33 is provided so as to protrude downward at the lower end of the baffle 30.

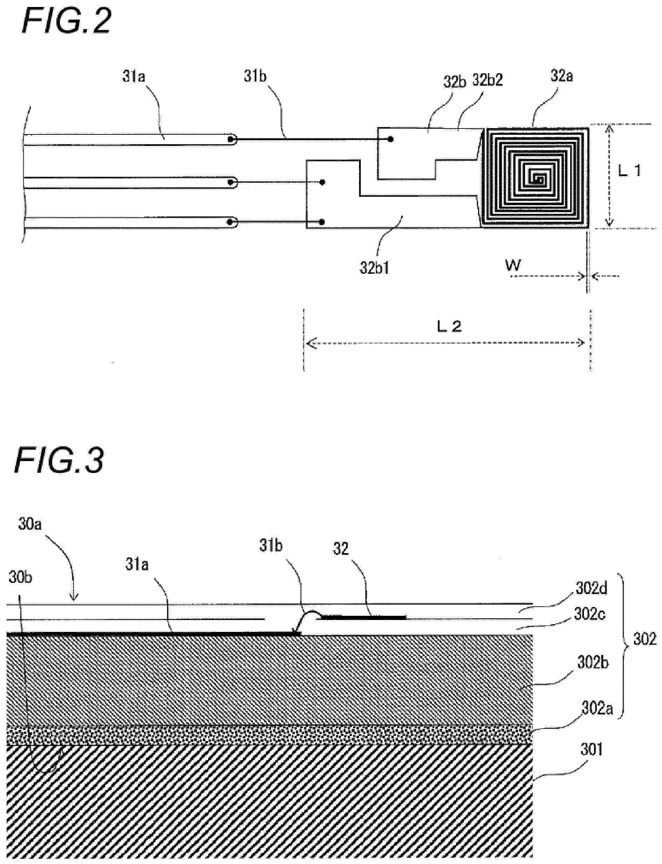

In the baffle 30 of the present embodiment, as shown in Fig. 3, a glasslining layer 302 is laminated on a base material 301. The glasslining layer 302 is provided so as to cover the base material 301 composed of a metal tube from the outside. That is, the glasslining layer 302 has a cylindrical shape. The glasslining layer 302 has a first surface 30a (outer peripheral surface) constituting a surface of the baffle 30 and a second surface 30b (inner peripheral surface) opposite to the first surface 30a. The glasslining layer 302 is laminated on the base material 301 via the second surface 30b.

As shown in Figs. 2 and 3, the platinum resistance temperature detector 32 of the present embodiment has a film shape. The platinum resistance temperature detector 32 is arranged parallel to the first surface 30a of the glasslining layer 302. The platinum resistance temperature detector 32 shown in Fig. 3 is arranged inside the glasslining layer 302. In other words, the platinum resistance temperature detector 32 is arranged between the first surface 30a and the second surface 30b of the glasslining layer 302. The platinum resistance temperature detector 32 of the present embodiment includes a detector body portion 32a formed of a platinum thin film and a detector terminal portion 32b electrically connected to the detector body portion 32a. In the platinum resistance temperature detector 32 of the present embodiment, the detector terminal portion 32b is constituted with two terminals of a first terminal 32b1 and a second terminal 32b2, and each terminal is formed of a platinum thin film.

The detector body portion 32a of the present embodiment has a turn portion having a shape formed by bending one wire into a hairpin shape and turning the wire 180 degrees. The detector body portion 32a further includes two leg portions extending from the turn portion. The leg portions extend in parallel. The detector body portion 32a has a shape in which the leg portions revolve around the turn portion so as to draw a spiral on one plane about the turn portion. Ends of both leg portions of the detector body portion 32a are connected to the platinum thin film constituting the detector terminal portion 32b. A structure of the platinum resistor element portion is merely an example, and may be a concentric shape or a zigzag shape.

The detector body portion 32a of the present embodiment has a short-side direction and a long-side direction. A dimension (L1) of the detector body portion 32a in the short-side direction is preferably 1 mm or more, and more preferably 5 mm or more. The dimension (L1) of the detector body portion 32a in the short-side direction is preferably 10 mm or less. A dimension (L2) of the detector body portion 32a in the long-side direction is preferably 5 mm or more, and more preferably 10 mm or more. The dimension (L2) of the detector body portion 32a in the long-side direction is preferably 30 mm or less, and more preferably 20 mm or less. In the present embodiment, from the viewpoint of easy handling, it is preferable that the dimension (L1) of the detector body portion 32a in the short-side direction is 5 mm or more and 10 mm or less and the dimension (L2) of the detector body portion 32a in the long-side direction is 10 mm or more and 20 mm or less.

As described above, the platinum resistance temperature detector 32 of the present embodiment includes two terminals of the first terminal 32b1 and the second terminal 32b2, and a platinum wire connecting the first terminal 32b1 and the second terminal 32b2. In the present embodiment, an electrical resistance value between the first terminal 32b1 and the second terminal 32b2 varies depending on the temperature, and thus temperature information of a point where the platinum resistance temperature detector 32 is arranged can be acquired.

In a case where the platinum resistance temperature detector 32 of the present embodiment is formed of a platinum thin film, a method of forming a platinum thin film may be a thin film forming method such as vapor deposition, sputtering, lithography, or etching. The platinum resistance temperature detector 32 of the present embodiment may be composed of a rolled foil or the like, or may be composed of a round wire or the like. From the viewpoint of facilitating measurement with small size and high accuracy, the platinum resistance temperature detector 32 is preferably formed by a vacuum film formation method of a vapor deposition film or the like. A thickness (average thickness) of the vapor deposition film is preferably 50 nm or more, and more preferably 70 nm or more. The thickness of the vapor deposition film is preferably 500 nm or less, and more preferably 300 nm or less. A thickness of the detector terminal portion 32b and a thickness of the detector body portion 32a may be the same or different.

In the present embodiment, the detector body portion 32a and the detector terminal portion 32b are formed of one platinum thin film, and there is no seam between the detector body portion 32a and the detector terminal portion 32b. An average line width (W) of the detector body portion 32a can be, for example, 30 µm or more. The average line width (W) may be, for example, 1000 µm or less, 500 µm or less, or 100 µm or less.

The reaction tank 1 of the present embodiment is provided with an electrical path 31 extending from one end of the baffle 30 serving as the fixed end toward the platinum resistance temperature detector 32. As shown in Fig. 3, the electrical path 31 extends through inside of the glasslining layer 302. The glasslining layer 302 in the present embodiment includes an undercoat glass layer 302a provided so as to be in contact with a surface of the base material 301, and an upper coating glass layer 302b in contact with the undercoat glass layer 302a from a side opposite to the base material 301. The glasslining layer 302 of the present embodiment includes a first cover glass layer 302c laminated on the upper coating glass layer 302b and a second cover glass layer 302d laminated on the first cover glass layer 302c. Among both surfaces of the second cover glass layer 302d, a surface opposite to a surface in contact with the first cover glass layer 302c is the first surface 30a of the glasslining layer 302.

Each glass layer of the present embodiment can be formed by spraying glass frits or the like, followed by firing, as in a common glasslined product. Therefore, in the figure, a boundary line is provided between these glass layers for the sake of convenience, but in practice, the glass layers are mutually compatible with each other at boundary portions of the glass layers, and interfaces are not necessarily clear.

In one example, as shown in Figs. 2 and 3, the electrical path 31 of the present embodiment may include a lead wire 31a embedded from the end of the baffle 30 to a point where the platinum resistance temperature detector 32 is arranged, and a connection wire 31b connecting the lead wire 31a and the detector terminal portion 32b. In another example of the electrical path 31, as will be described later, a contact portion between the lead wire 31a and the connection wire 31b has a terminal portion 31c composed of a member different from both wires. Although not described in detail herein, if necessary, the detector terminal portion 32b and the lead wire 31a may be directly connected by welding or the like without using the connection wire 31b.

In one aspect shown in Fig. 3, the platinum resistance temperature detector 32 is located at a boundary portion between the first cover glass layer 302c and the second cover glass layer 302d. In this aspect, the lead wire 31a is located at a boundary portion between the upper coating glass layer 302b and the first cover glass layer 302c.

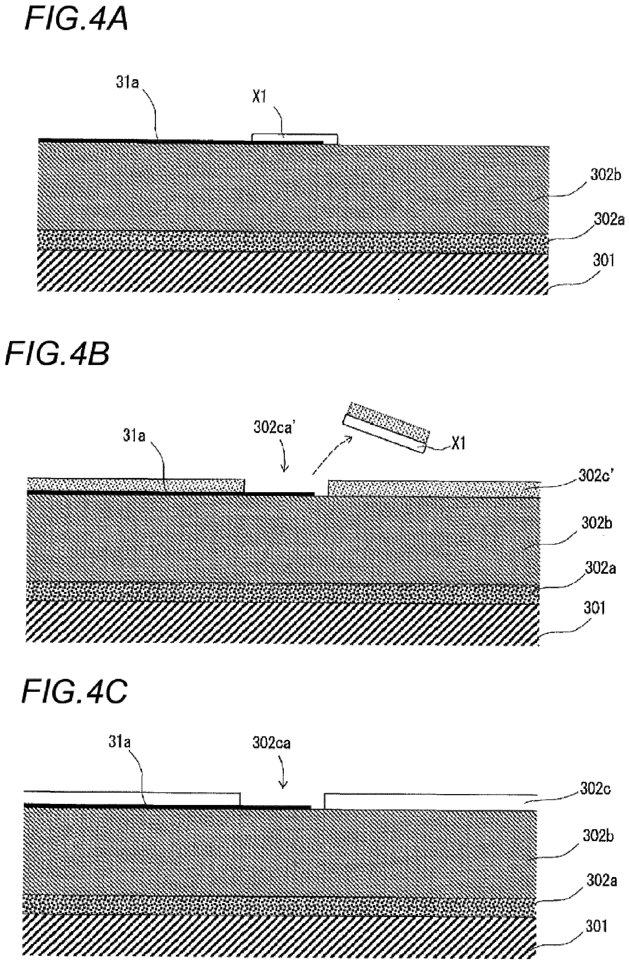

The platinum resistance temperature detector 32 and the lead wire 31a can be arranged as described above by, for example, a method shown in Figs. 4A to 4F. First, a glass powder for forming the undercoat glass layer 302a is sprayed onto the surface of the base material 301 of the baffle 30 to form a powder layer (undercoat glass powder layer), and the undercoat glass powder layer is sintered to form the undercoat glass layer 302a. Next, a glass powder for forming the upper coating glass layer 302b is sprayed onto a surface of the undercoat glass layer 302a to form a powder layer (upper coating glass powder layer), and the upper coating glass powder layer is sintered to form the upper coating glass layer 302b.

The lead wire 31a is arranged on the surface of the upper coating glass layer 302b, and a masking sheet X1 is attached to a site serving as a connection point with the connection wire 31b (Fig. 4A). A glass powder for forming the first cover glass layer 302c is sprayed onto the lead wire 31a having the masking sheet X1 attached to the end so that a powder layer is formed (first cover glass powder layer 302c'), and then the masking sheet X1 is removed to expose a surface of the end of the lead wire 31a (Fig. 4B). In the state, the first cover glass powder layer 302c' is sintered to form the first cover glass layer 302c in which a window portion 302ca for partially exposing a surface of the lead wire 31a is formed (Fig. 4C).

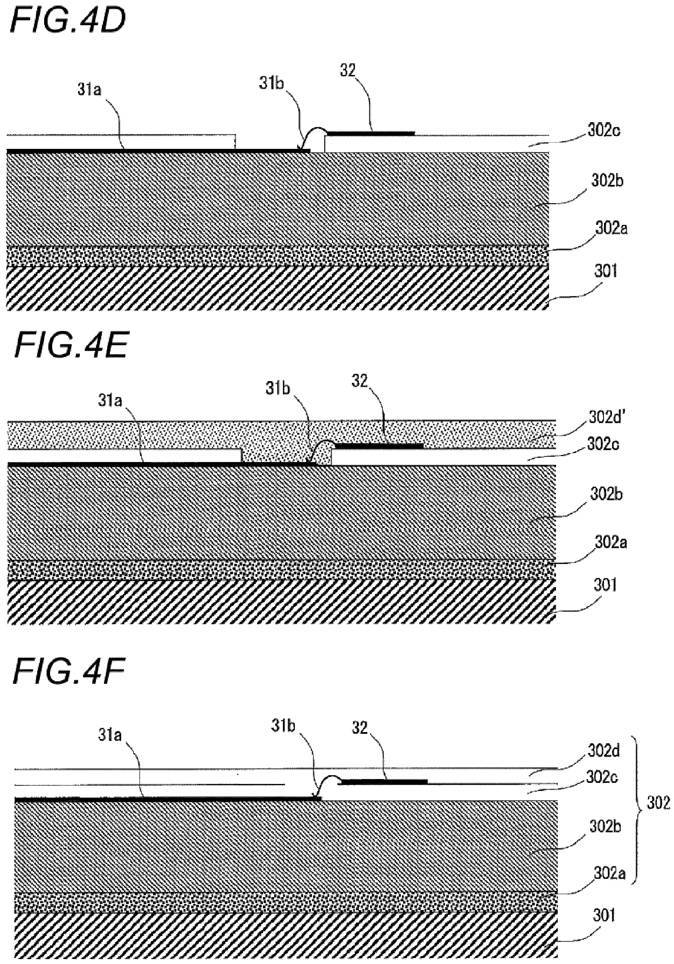

Next, the platinum resistance temperature detector 32 is arranged on the first cover glass layer 302c on which the window portion 302ca is formed. At this time, the platinum resistance temperature detector 32 is arranged so as to be adjacent to the window portion 302ca. The lead wire 31a exposed in the window portion 302ca and the detector terminal portion 32b are electrically connected to each other using the connection wire 31b (Fig. 4D). A connection method of the connection wire 31b is not particularly limited, such as welding, silver brazing, soldering, physical contact, or the like. For the connection method, it is preferable to employ welding from the viewpoint that highly reliable connection can be easily performed. The welding is preferably performed using a pen spot welding material. Before the platinum resistance temperature detector 32 is arranged in the window portion 302ca, the connection wire 31b may be connected in advance to the detector terminal portion 32b. In this case, in addition to the above method, a wire bonding device or the like may be used for the connection between the connection wire 31b and the detector terminal portion 32b.

After the electrical connection between the lead wire 31a exposed in the window portion 302ca and the detector terminal portion 32b is completed using the connection wire 31b, a glass powder for forming the second cover glass layer 302d is sprayed to form a powder layer (second cover glass powder layer 302d') (Fig. 4E), and the second cover glass powder layer 302d' is sintered to form the second cover glass layer 302d (Fig. 4F). In this way, a glasslined product (baffle 30) in which the electrical path 31 and the platinum resistance temperature detector 32 are arranged as shown in Fig. 3 can be manufactured.

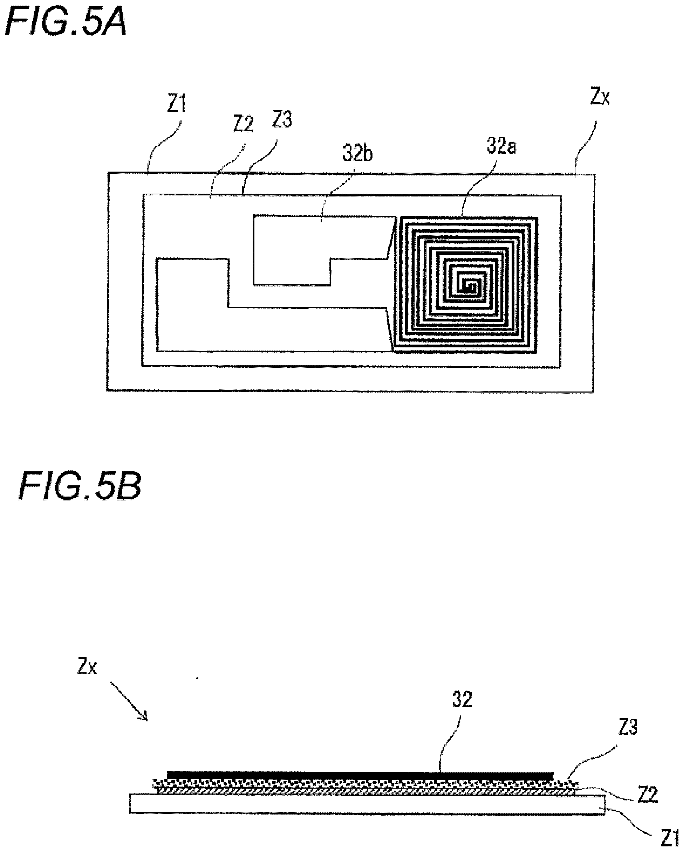

In the present embodiment, since the platinum resistance temperature detector 32 has a film shape, careful handling may be required when handling it alone. In such a case, a transfer sheet Zx as shown in Figs. 5A and 5B can be used. The transfer sheet Zx has the same configuration as that of a ceramic transfer sheet used for printing a design, a sentence, or the like on porcelain or the like. The transfer sheet Zx has a laminate structure in which a separator sheet Z1 formed of kraft paper or plastic film subjected to a mold release treatment, an adhesive layer Z2 formed of a water-soluble adhesive, a glass layer Z3 formed of glass such as soda lime glass, and the film-shaped platinum resistance temperature detector 32 are laminated in this order.

When the platinum resistance temperature detector 32 is arranged on the surface of the first cover glass layer 302c using the transfer sheet Zx, water is applied to the transfer sheet Zx to reduce the adhesive force of the adhesive layer Z2 to remove the separator sheet Z1, and the platinum resistance temperature detector 32 can be arranged such that the platinum resistance temperature detector 32 is on the upper side and the glass layer Z3 is interposed between the platinum resistance temperature detector 32 and the first cover glass layer 302c. At this time, the platinum resistance temperature detector 32 can be easily arranged by using the transfer sheet Zx. When the transfer sheet Zx is used, a position of the platinum resistance temperature detector 32 can be easily adjusted. The platinum resistance temperature detector 32 arranged as described above can be fixed to the first cover glass layer 302c by sintering and then connected to the lead wire 31a by the connection wire 31b.

Instead of the transfer sheet Zx, a thin glass plate (for example, thickness of 0.1 mm to 0.4 mm) slightly larger than the platinum resistance temperature detector 32 may be used, and the platinum resistance temperature detector 32 may be placed on the glass plate and arranged at a predetermined position. As the glass plate, a glass plate made of soda lime glass or the like may be used. As a support material of the platinum resistance temperature detector 32, an alumina plate may be used instead of such a glass plate.

In the present embodiment, the platinum resistance temperature detector 32 and the support material are made only of inorganic substances, and do not substantially contain organic substances (for example, 1 mass% or less). In this way, since the platinum resistance temperature detector 32 is embedded in the glasslining layer 302, voids due to the decomposition gas of the organic substance are less likely to be generated in the glasslining layer 302 in the present embodiment. Further, when a thin glass plate or an alumina plate is used as the support material of the platinum resistance temperature detector 32, there is a low possibility that voids are generated even when the platinum resistance temperature detector 32 is embedded in the glasslining layer 302 without removing the support material.

In the first detection unit 41 of the present embodiment, temperature detection is performed using the fact that a resistance value of the platinum resistance temperature detector changes depending on the temperature. In the second detection unit 42 of the present embodiment, the sheath thermocouple 33 senses the temperature. In the second detection unit 42, the heat of the accommodated substance is transferred to the thermocouple through the glasslining layer, the base material, a sheath covering material, and an insulating material. Therefore, it is difficult to expect a good response to the temperature measurement by the second detection unit 42. For example, in the case where the thermocouple is embedded in the glasslining by the same method as in Patent Literature 2, a measurement error may be increased by about several times to ten times as compared with the temperature measuring resistor. In other words, in the first detection unit 41 of the present embodiment, the measurement error can be reduced from a fraction to a tenth as compared with the thermocouple of the related art. Therefore, the first detection unit 41 of the present embodiment can perform highly accurate temperature detection.

The lead wire 31a and the connection wire 31b are preferably excellent in corrosion resistance. The lead wire 31a and the connection wire 31b are preferably made of noble metal such as platinum, gold, platinum/rhodium alloy, and gold/palladium alloy. The lead wire 31a and the connection wire 31b may be round wires or rectangular wires. The lead wire 31a is preferably a rectangular wire from the viewpoint of workability, and is preferably a foil-like conductor.

The lead wire 31a preferably has a thickness (t) of 0.01 mm or more in order to exhibit excellent strength. The thickness (t) of the lead wire 31a is preferably 1 mm or less, more preferably 0.2 mm or less, further preferably 0.08 mm or less, and particularly preferably 0.04 mm or less in order to facilitate arranging the lead wire 31a at a deeper position from the first surface 30a of the glasslining layer 302. A width (w) of the lead wire 31a is preferably 0.1 mm or more in order to exhibit excellent strength. The width (w) of the lead wire 31a is more preferably 0.2 mm or more, and still more preferably 0.5 mm or more. The width (w) of the lead wire 31a is preferably 3 mm or less, more preferably 2 mm or less, and still more preferably 1 mm or less in order to reduce an occupied space. A magnification (w / t) of the width (w) with respect to the thickness (t) of the lead wire 31a can be, for example, 3 times or more and 100 times or less.

The connection wire 31b is preferably a round wire having a diameter (D) of 0.6 µm or more. The diameter (D) of the connection wire 31b is more preferably 0.01 mm or more. The diameter (D) of the connection wire 31b is preferably 1 mm or less, and more preferably 0.5 mm or less. The diameter (D) of the connection wire 31b is preferably equal to or less than the width (w) of the lead wire 31a (w ≥ D). A magnification (w / D) of the width (w) of the lead wire 31a with respect to the diameter (D) can be 1 times or more and 100 times or less.

In the aspect shown in Fig. 3, a depth from the first surface 30a of the glasslining layer 302 to the platinum resistance temperature detector 32 is smaller than a depth from the first surface 30a to the lead wire 31a. Therefore, more excellent temperature detection accuracy can be exhibited in the first detection unit 41. An average depth from the first surface 30a to the platinum resistance temperature detector 32 may be 0.2 mm to 1.0 mm. The average depth is an arithmetic mean value of measured values obtained by measuring depths to an upper surface of the platinum resistance temperature detector 32 at a plurality of positions (for example, 5 positions). An average depth from the platinum resistance temperature detector 32 to the lead wire 31a can be 0.2 mm to 1.0 mm. The average depth is an arithmetic mean value of measured values obtained by measuring depths from a lower surface of the platinum resistance temperature detector 32 to a lower surface of the lead wire 31a at a plurality of positions (for example, 10 positions). From such a point of view, an average thickness of the upper coating glass layer 302b and the second cover glass layer 302d can be, for example, 0.2 mm or more and 0.7 mm or less, and is preferably 0.4 mm or more and 0.6 mm or less.

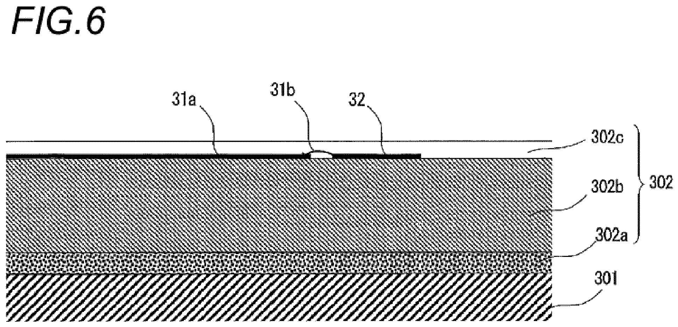

In the glasslining layer 302 of the present embodiment, for example, as shown in Fig. 6, both the lead wire 31a and the platinum resistance temperature detector 32 are arranged on the surface of the upper coating glass layer 302b and may be covered with only the first cover glass layer 302c.

In order to manufacture the first detection unit 41 in the arrangement shown in Fig. 6, for example, a large area of the masking sheet X1 that can secure an arrangement space of the platinum resistance temperature detector 32 may be used. When such a masking sheet X1 is used, for example, two methods are used to manufacture the first detection unit 41 shown in Fig. 6. In a first method, the first cover glass layer 302c having the wide window portion 302ca capable of arranging the platinum resistance temperature detector 32 is temporarily formed. Next, the platinum resistance temperature detector 32 is arranged in the window portion 302ca to electrically connect with the lead wire 31a. Finally, the window portion 302ca is filled with glass powder and sintered.

In a second method, for example, after the first cover glass powder layer 302c' is formed and before the first cover glass powder layer 302c' is sintered, the platinum resistance temperature detector 32 is arranged. The platinum resistance temperature detector 32 is arranged at a position where the masking sheet X1 is removed and the upper coating glass layer 302b is exposed. Next, after the platinum resistance temperature detector 32 is connected to the lead wire 31a, the glass powder is sprayed onto the platinum resistance temperature detector 32. In the second method, finally, the first cover glass powder layer 302c' and the glass powder subsequently sprayed are sintered at once to form the first cover glass layer 302c.

The first detection unit can also be formed by a third method that does not use the masking sheet X1, for example. In the third method, before the first cover glass powder layer 302c' is formed, the lead wire 31a and the platinum resistance temperature detector 32 are electrically connected on the surface of the upper coating glass layer 302b, and then the glass powder is sprayed to form the first cover glass powder layer 302c'. Thereafter, the first cover glass powder layer 302c' is sintered to form the first cover glass layer 302c.

The third method and the second method are advantageous in that the number of times of baking can be reduced as compared with the first method. The third method is also advantageous in that the number of times the glass powder is sprayed is small. On the other hand, the first method is advantageous in that the connection work can be easily performed because the lead wire 31a is firmly fixed with the sintered glass (first cover glass layer 302c) when the lead wire 31a and the platinum resistance temperature detector 32 are electrically connected to each other.

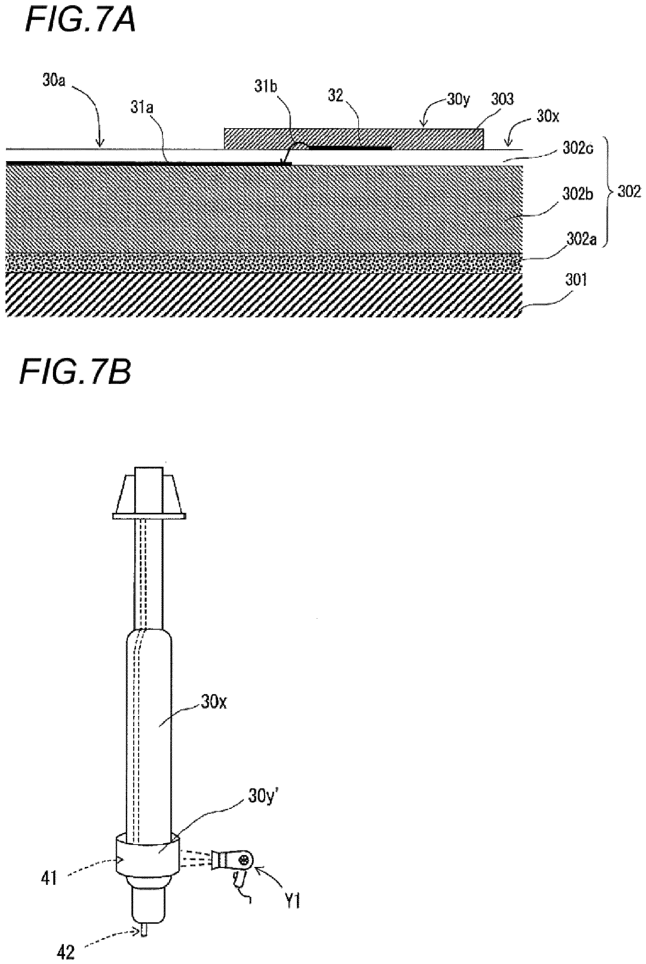

The platinum resistance temperature detector 32 in the present embodiment may not necessarily be arranged inside the glasslining layer 302, and may be arranged outside the first surface 30a of the glasslining layer 302 as shown in Figs. 7A to 7C. In such a case, the platinum resistance temperature detector 32 may be covered with a resin layer 303. That is, the baffle 30 of the present embodiment may further include the resin layer 303 that covers the glasslining layer 302, and the platinum resistance temperature detector 32 may be arranged at a boundary portion between the glasslining layer 302 and the resin layer 303.

The resin layer 303 may be formed of, for example, a reaction-curable resin such as an epoxy resin or a resin having excellent chemical resistance and heat resistance, such as a fluororesin. Examples of the fluororesin include polytetrafluoroethylene (PTFE), tetrafluoroethylene-perfluoroalkyl vinyl ether copolymer (PFA), tetrafluoroethylene-hexafluoropropylene copolymer (FEP), polyvinylidene fluoride (PVDF), tetrafluoroethylene-ethylene copolymer (ETFE), polychlorotrifluoroethylene (PCTFE), chlorotrifluoroethylene-ethylene copolymer (ECTFE), polyvinyl fluoride (PVF), fluoroolefin-vinyl ether copolymer, vinylidene fluoride-tetrafluoroethylene copolymer, and vinylidene fluoride-propylene hexafluoride copolymer.

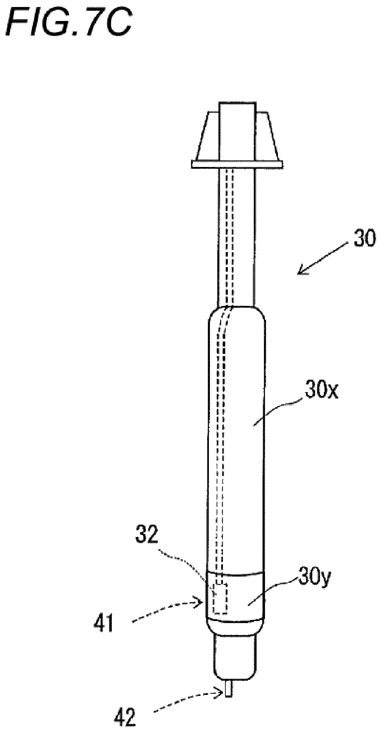

As shown in Figs. 7B and 7C, the resin layer 303 may be formed using a heat shrinkable tube 30y' made of fluororesin as described above. That is, the baffle 30 of the present embodiment may include a baffle body 30x including the base material 301 and the glasslining layer 302 and provided with the glasslining layer 302 on an outer surface thereof, and a heat shrinkable tube 30y provided so as to surround the baffle body 30x, the heat shrinkable tube 30y may be provided so as to cover the platinum resistance temperature detector 32, and the resin layer 303 may be formed of the heat shrinkable tube 30y.

In order to form the resin layer 303 using the heat shrinkable tube 30y', the baffle body 30x may be passed through the heat shrinkable tube 30y' having an inner diameter larger than the thickness of the baffle body 30x at a position where the first detection unit 41 is formed, and the heat shrinkable tube 30y' may be heated by a heating device Y1 such as a hot jet at the position where the first detection unit 41 is formed to reduce the diameter.

Examples of the heat shrinkable tube made of fluororesin include a heat shrinkable tube made of polytetrafluoroethylene (PTFE heat shrinkable tube), a heat shrinkable tube made of tetrafluoroethylene-perfluoroalkyl vinyl ether copolymer (PFA heat shrinkable tube), and a heat shrinkable tube made of tetrafluoroethylene-hexafluoropropylene copolymer (FEP heat shrinkable tube). Among these, since the PFA heat shrinkable tube has heat resistance higher than that of the FEP heat shrinkable tube, a heat shrinkage start temperature lower than that of the PTFE heat shrinkable tube, and has good workability, the PFA heat shrinkable tube is suitable as a heat shrinkable tube for forming the resin layer 303.

In the above baffle 30, since the platinum resistance temperature detector 32 can be accessed by removing the resin layer 303, for example, a contact failure can be easily repaired when occurring between the connection wire 31b and the detector terminal portion 32b. Further, in the above baffle 30, even when a defect occurs in the platinum resistance temperature detector 32 itself, the platinum resistance temperature detector 32 can be replaced with a new one by cutting the heat shrinkable tube or the like.

In order to facilitate replacement work as described above, the connection wire 31b constituting the electrical path 31 preferably protrudes from the glasslining layer 302.

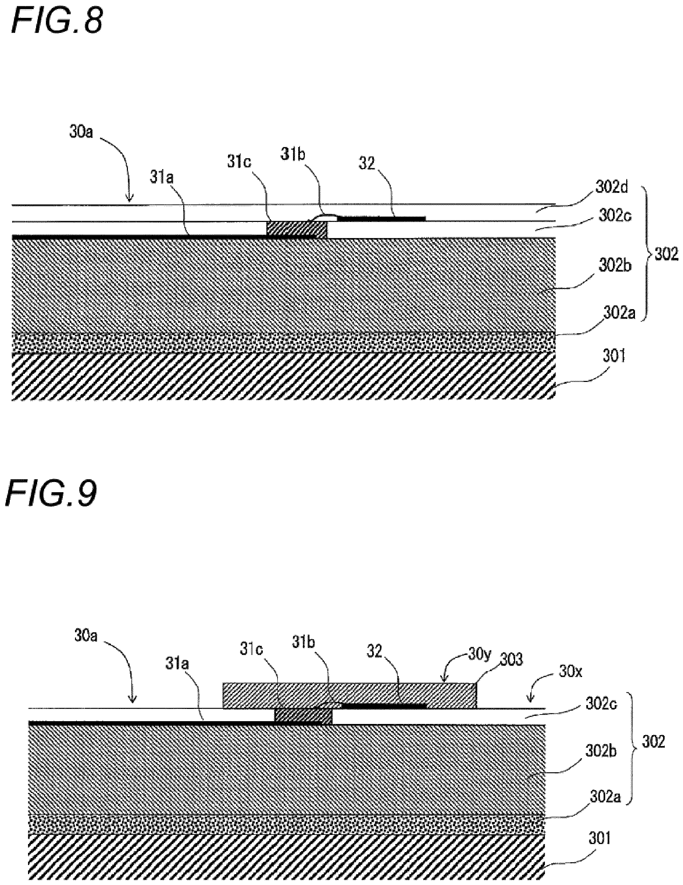

In the baffle 30 of the present embodiment, as described above, the contact portion between the lead wire 31a and the connection wire 31b can be provided with the terminal portion 31c composed of a member different from both wires. As shown in Fig. 8, the thickness of the terminal portion 31c may be larger than that of the lead wire 31a, and at least a part of the terminal portion 31c may be embedded shallower than the lead wire 31a. Accordingly, the platinum resistance temperature detector 32 can be easily replaced even when the platinum resistance temperature detector 32 is arranged inside the glasslining layer 302.

In the case where the platinum resistance temperature detector 32 is embedded in the glass constituting the glasslining layer 302 and is arranged inside the glasslining layer 302, in order to replace the platinum resistance temperature detector 32, first, It is necessary to scrape the glass on the surface of the platinum resistance temperature detector 32 together with the platinum resistance temperature detector 32. In the aspect shown in Fig. 8, since the terminal portion 31c having a large sectional area can be exposed by deletion of the glass, it is possible to easily electrically connect the newly arranged platinum resistance temperature detector 32 and the lead wire 31a.

In order to exhibit such an effect, the terminal portion 31c is preferably kept thicker than the lead wire 31a to the same depth as a position where the platinum resistance temperature detector 32 is arranged or to a position shallower than the position. It is preferable that the terminal portion 31c is formed in a columnar shape thicker than the lead wire 31a and extends in the thickness direction of the glasslining layer. The terminal portion 31c can be formed of, for example, a conductive glass powder containing a metal.

In a case where a dimension with the longest length of a line segment connecting two different points on a contour line in a cross-sectional shape when the terminal portion 31c is cut on a plane parallel to the first surface 30a of the glasslining layer 302 is defined as a "long dimension", and a dimension in a direction orthogonal to the long dimension is defined as a "short dimension", the short dimension is preferably 0.1 mm or more, and more preferably 0.2 mm or more. The short dimension may be 0.3 mm or more, 0.4 mm or more, or 0.5 mm or more. The short dimension is preferably 2 mm or less, and more preferably 1.5 mm or less. The short dimension may be 1.2 mm or less, or may be 1.0 mm or less.

The long dimension may be the same dimension as the short dimension. That is, the cross-sectional shape may be a circular shape, a square shape, or the like. The long dimension may be 1 time or more the short dimension, 1.1 times or more the short dimension, or 1.2 times or more the short dimension. The long dimension is preferably ten times or less the short dimension.

More specifically, the cross-sectional shape of the terminal portion 31c is preferably large enough to draw a circle having a diameter of 0.1 mm inside the contour line, more preferably large enough to draw a circle having a diameter of 0.2 mm, and still more preferably large enough to draw a circle having a diameter of 0.3 mm. Further, the cross-sectional shape preferably has a shape that fits within a circle having a diameter of 10 mm, and more preferably has a shape that fits within a circle having a diameter of 8 mm. In the terminal portion 31c, a section having a preferable cross-sectional shape as described above is preferably continuous for 0.1 mm or more in the thickness direction of the glasslining layer 302. The section is more preferably continuous for 0.2 mm or more, and further preferably continuous for 0.3 mm or more in the thickness direction. The section is usually set to 3 mm or less.

As shown in Fig. 9, also in the case of providing the above resin layer 303, the terminal portion 31c is useful. That is, it is preferable that the platinum resistance temperature detector 32 is arranged at a boundary portion between the glasslining layer 302 and the resin layer 303, the terminal portion 31c having a larger cross-sectional area on a plane parallel to the glasslining layer 302 than the lead wire 31a is formed on the glasslining layer 302, and the terminal portion 31c is exposed on the first surface 30a of the glasslining layer 302.

In the embodiment shown in Fig. 9, in a case where the resin layer 303 is formed of a resin (for example, a reaction-curable resin such as an epoxy resin) different from a resin which is easily removed from the glasslining layer 302 like a fluororesin, when the resin layer 303 is removed together with the platinum resistance temperature detector 32 in order to replace the platinum resistance temperature detector 32, the connection wire 31b may also be removed together. However, in such an embodiment, the new platinum resistance temperature detector 32 can be easily connected to the lead wire 31a by providing the terminal portion 31c.

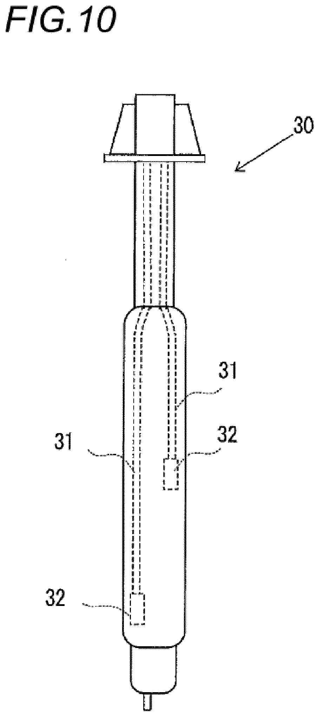

In the present embodiment, the detection unit using the platinum resistance temperature detector 32 is arranged at only one position, but as shown in Fig. 10, a temperature detection unit with the platinum resistance temperature detector 32 may be provided at a plurality of positions by using a plurality of platinum resistance temperature detectors 32. That is, the baffle 30 of the present embodiment may include a plurality of sets of the temperature measurement members such as a platinum resistance temperature detector and a lead wire. In this case, one detection unit and the other detection unit are preferably located at different positions in the depth direction of the tank body 10. In this way, it is possible to know a temperature condition in the tank body 10 in more detail.

As shown in Fig. 10, in the case where the temperature detection unit with the platinum resistance temperature detector 32 is provided at a plurality of positions using the plurality of platinum resistance temperature detectors 32, the platinum resistance temperature detectors 32 or the lead wires 31a to be used may be the same as or different from each other.

In the present embodiment, since the influence of the resistance of the lead wire 31a on the temperature measurement can be reduced, a three-wire type in which two lead wires are connected to the first terminal 32b1 of the platinum resistance temperature detector 32 is exemplified, but the number of lead wires connected to one platinum resistance temperature detector 32 may be two (two-wire type), four (four-wire type), or five. That is, the number of the lead wires 31a connected to each of the first terminal 32b1 and the second terminal 32b2 may be one or two.

In the present embodiment, the baffle 30 is exemplified as the glasslined product, but the detection unit provided at the baffle 30 of the present embodiment may be provided at the tank body 10 or the agitator 21. That is, the glasslined product of the present invention may be the tank body 10 or the agitator 21. The detection unit for performing the temperature detection with the platinum resistance temperature detector 32 may be provided at the valve seat 14 or the valve body 15. Since the detection unit of the present embodiment can rapidly measure the temperature at the pin spot, it is easy to provide the detection unit at a plurality of positions of the reaction tank 1, and for example, it is easy to provide the detection unit at both the baffle 30 and the valve body 15. The glasslined product of the present invention may be other than the constituent members of the reaction tank 1. For example, the glasslined product of the present invention may be pipes or the like.

A glasslined product of the present embodiment includes a base material, a glasslining layer, a platinum resistance temperature detector, and an electrical path, in which the glasslining layer includes a first surface and a second surface that is a surface opposite to the first surface, and is laminated on the base material via the second surface, the platinum resistance temperature detector is arranged inside the glasslining layer or outside the first surface of the glasslining layer, and the electrical path extends through inside of the glasslining layer and is electrically connected to the platinum resistance temperature detector. The glasslined product of the present embodiment is thereby capable of accurate temperature measurement, and such an effect can also be exhibited in a reaction tank other than the above-exemplified reaction tank.

The glasslined product according to a preferred aspect of the present embodiment further includes a resin layer that covers the first surface of the glasslining layer, and the platinum resistance temperature detector is arranged at a boundary portion between the glasslining layer and the resin layer. Accordingly, in the present embodiment, it is easy to cope with a case where a defect occurs in the platinum resistance temperature detector itself or the connection between the platinum resistance temperature detector and an electrical path, and accurate temperature measurement can be easily performed continuously for a long period of time.

The glasslined product according to a preferred aspect of the present embodiment includes a product body including the base material and the glasslining layer, the glasslining layer being provided on an outer surface thereof and a heat shrinkable tube provided so as to surround the product body, in which the resin layer is composed of the heat shrinkable tube, and the heat shrinkable tube is provided so as to cover the platinum resistance temperature detector. Accordingly, in the present embodiment, it is easy to cope with a case where a defect occurs in the platinum resistance temperature detector itself or the connection between the platinum resistance temperature detector and an electrical path.

In the glasslined product according to a preferred aspect of the present embodiment, the platinum resistance temperature detector is arranged inside the glasslining layer. Accordingly, in the present embodiment, the platinum resistance temperature detector can be securely protected.

In the glasslined product according to a preferred aspect of the present embodiment, the electrical path includes a lead wire, and a depth from the first surface of the glasslining layer to the platinum resistance temperature detector is smaller than a depth from the first surface to the lead wire. Accordingly, in the present embodiment, more accurate temperature measurement can be performed.

In the glasslined product according to a preferred aspect of the present embodiment, the electrical path includes a lead wire, a terminal portion for electrically connecting the lead wire and the platinum resistance temperature detector is provided in the electrical path, and at least a part of the terminal portion is embedded in a position shallower than the lead wire. Accordingly, in the present embodiment, it is easy to replace the platinum resistance temperature detector, and accurate temperature measurement can be easily performed continuously for a long period of time.

In the glasslined product according to a preferred aspect of the present embodiment, the platinum resistance temperature detector has a film shape. Accordingly, in the present embodiment, it is possible to secure a large heat receiving area of the platinum resistance temperature detector and to reduce the necessity of securing a large space for installation of the platinum resistance temperature detector, and it is possible to increase the degree of freedom of an installation position.

As described above, according to the present invention, a glasslined product capable of accurate temperature measurement can be provided. It is to be noted that the present invention for obtaining such an effect is not limited to the above example, and various modifications are possible within a range in which the technical significance thereof is not significantly impaired.

### REFERENCE SIGNS LIST

1: reaction tank
10: tank body
20: stirring device
21: agitator
30: baffle
30a: first surface
30b: second surface
30x: baffle body
30y: heat shrinkable tube
31: electrical path
31a: lead wire
31b: connection wire
31c: terminal portion
32: platinum resistance temperature detector
32a: detector body portion
32b: detector terminal portion
40: temperature measurement device
301: base material
301: resin layer
302: glasslining layer
303: resin layer
X1: masking sheet
Zx: transfer sheet

## Claims

1. A glasslined product comprising:
a base material;
a glasslining layer;
a platinum resistance temperature detector; and
an electrical path, wherein
the glasslining layer includes a first surface and a second surface that is a surface opposite to the first surface, and is laminated on the base material via the second surface,
the platinum resistance temperature detector is arranged inside the glasslining layer or outside the first surface of the glasslining layer, and
the electrical path extends through inside of the glasslining layer and is electrically connected to the platinum resistance temperature detector.

2. The glasslined product according to claim 1, further comprising:
a resin layer that covers the first surface of the glasslining layer, wherein
the platinum resistance temperature detector is arranged at a boundary portion between the glasslining layer and the resin layer.

3. The glasslined product according to claim 2, further comprising:
a product body including the base material and the glasslining layer, the glasslining layer being provided on an outer surface; and
a heat shrinkable tube provided so as to surround the product body, wherein
the resin layer is composed of the heat shrinkable tube, and the heat shrinkable tube is provided so as to cover the platinum resistance temperature detector.

4. The glasslined product according to claim 1, wherein the platinum resistance temperature detector is arranged inside the glasslining layer.

5. The glasslined product according to claim 4, wherein
the electrical path includes a lead wire, and
a depth from the first surface of the glasslining layer to the platinum resistance temperature detector is smaller than a depth from the first surface to the lead wire.

6. The glasslined product according to any one of claims 1 to 4, wherein
the electrical path includes a lead wire,
a terminal portion for electrically connecting the lead wire and the platinum resistance temperature detector is provided in the electrical path, and
at least a part of the terminal portion is embedded in a position shallower than the lead wire.

7. The glasslined product according to claim 6, wherein a depth from the first surface of the glasslining layer to the platinum resistance temperature detector is smaller than a depth from the first surface to the lead wire.

8. The glasslined product according to any one of claims 1 to 7, wherein the platinum resistance temperature detector has a film shape.
